Europäisches Patentamt

European Patent Office

Office européen des brevets

(11) Publication number: 0 214 356
A1

## (12) EUROPEAN PATENT APPLICATION

(21) Application number: 85830219.3

(22) Date of filing: 26.08.85

(51) Int. Cl.⁴: B60B 9/20 , B60C 23/00

(43) Date of publication of application:
18.03.87 Bulletin 87/12

(84) Designated Contracting States:
AT BE CH DE FR GB LI NL SE

(71) Applicant: Michelozzi, Loris
Via Mentana 12
I-50047 Prato Firenze(IT)
Applicant: Zini, Giuliano
Via Oglio 12
I-50047 Prato Firenze(IT)

(72) Inventor: Michelozzi, Loris
Via Mentana 12
I-50047 Prato Firenze(IT)
Inventor: Zini, Giuliano
Via Oglio 12
I-50047 Prato Firenze(IT)

(74) Representative: Mannucci, Gianfranco,
Dott.-Ing.
Ufficio Tecnico Ing. A. Mannucci Via della
Scala 4
I-50123 Firenze(IT)

(54) Wheel for motor vehicle or the like, with variable-volume plenum chamber communicating with the inner tube of the tyre, for an improved adhesion.

(57) A wheel (1) for motor vehicle or the like, comprises at least a variable-volume space or plenum chamber (19) communicating with the inner tube of the tyre (5). In consequence of the deflection of the tyre due to a rise of the vertical load onto the wheel (1), some volume of air spills into the plenum chamber (19) whose inner volume increases for the displacement of a mobile wall (17) of it. Elastic means, like springs (25) or similar, urge the mobile wall (17) to counteract said increase of volume thus limiting the increase of the tyre deflection, the increased deflection due to the presence of the plenum chamber (19) permitting an improved adhesion on the roadway.

Fig. 1

## "WHEEL FOR MOTOR VEHICLE OR THE LIKE, WITH VARIABLE-VOLUME PLENUM CHAMBER COMMUNICATING WITH THE INNER TUBE OF THE TYRE, FOR AN IMPROVED ADHESION"

The invention relates to a wheel for motor vehicles and, in general, for motor vehicles which use wheels with tyres, which tyres, on the occasion of a rise of the vertical load on the wheel, undergo a deflection, that is as flattening against the roadway which is greater than that of common tyres. Such greater deflection -with the consequence of an increase of adhesion which limits or avoids skiddings in case of sharp brakings, bends handled at high speed or similar -is due to the fact that the wheel comprises at least a plenum chamber (or space), whose volume may vary, into which some volume of air spills from the inner tube communicating with said plenum chamber. The plenum chamber has at least a wall which can be moved when said spillage takes place, the wall being urged by elastic means so as to counteract said increase of volume, thereby limiting the tyre deflection increase. The wheels according to the invention may be advantageously used as front wheels of the usual motor vehicles for a more efficient braking action.

According to the invention, a wheel for a motor vehicle or the like comprises at least a variable-volume plenum chamber or space communicating with the tyre inner tube, into which a volume of air can spill in consequence of the tyre deflection against the roadway due to a rise of load onto the wheel, with an increase of the inner volume of the plenum chamber; at least one wall of the plenum chamber is movable and is urged by elastic means, like springs or similar, so as to counteract said increase of volume and limit said flattening (or deflection). The plenum chamber permits a greater deflection respect to a usual tyre for an improved adhesion to the roadway.

Advantageously, according to the invention, the plenum chamber is made up of the ensemble of variable-volume chambers of one or more cylinders fastened to the rim, said chambers being delimited by the head wall of a piston tightly slidable into said cylinder or cylinders and urged by elastic means in such a direction as to counteract the increase of volume of said chambers. The cylinders are symmetrically located inside the rim edge, to the opposite side of the wheel hub, and the elastic means which urge the piston are made up of compression springs. Means for adjusting the spring reaction on the piston are also provided.

There are further provided stop means for limiting the increase of the plenum chamber volume in order to avoid undue deflection of the tyre as well as stop means for limiting reductions of the plenum chamber volume to avoid a reduction of the contact zone of the tyre with the roadway, in case of a decrease of the vertical load on the wheel.

The invention will be better understood by a reading of the following description in conjunction with the accompanying drawing which shows a practical non limitative exemplification of the invention itself. In the drawing:

Fig.1 shows a front elevation of a wheel for motor vehicles according to the invention;

Fig.2 shows a sectional view on line II-II of Fig. 1;

Fig.3 shows a sectional view of the end portion of one of the cylinders constituting the plenum chamber with the spring adjustment; and

Fig.4 shows a front elevation of a motor vehicle wheel which includes a modified embodiment of the invention.

As shown in the drawing, the wheel according to the invention, generally indicated by 1, comprises a rim 3 on which a tyre 5 having suitable cross-section is mounted, with a valve 7 for the inflation. The tyre 5 may be provided with an inner tube, or may be tubeless. In the latter case, the inflation air is contained in the annular chamber CA having the wall made up of the flanks and peripheral zone of the tyre, as well as a shaped groove 3G of the rim. Below said groove a disk portion 11 of the rim is fixed, which results convex outwardly of the vehicle, to house therein the hub on which the wheel is fixed and the brake means, which can be of drum or disk-type. The portion 11 has a central hole 13 for the passage of the hub end and, around the hole 13, a set of holes 14, having their centres disposed along a circumference, for the passage of the wheel fastening bolts.

Whereas, according to the common technique, the space in which the inflation air of the tyre is contained may be considered as a constant volume, in the wheel according to the invention such space has a changeable volume since the inner tube, or the annular chamber CA (in the case of a tubeless tyre), are in communication with at least a space, that is, a plenum chamber, whose volume can increase on the occurrence of volume reductions and pressure rises in the inside of the tyre.

Therefore, when, for any reason (for example in the occasion of a sharp braking) the tyre warps, so that its inner volume diminishes, whereas in a conventional tyre a corresponding increase of pressure takes place -owing to the poor or no expansibility of the carcassa walls -in the tyre of the wheel according to the invention instead, the pressure remains almost constant, since a portion of the inflation air, corresponding to the volume decrease due to the deformation, can spill into said plenum chamber whose volume can, in turn, change as a consequence of said spillage.

In the example of the drawing, the variable-volume plenum chamber is made up of a set of four cylinders 15 placed in the external recess of the rim between the convexity of the disk portion 11 and the edge 3B for the tyre seat. For the purposes of the invention it is not necessary a very large inner volume of the cylinders 15, so that their positioning in said recess is rather easy. In some case, however, it may be necessary to accomodate the central part of cylinders 15 into suitable carvings (or notches) formed on the outer periphery of said convexity.

In each of the cylinders 15 a piston -supplied with compression rings 18 -slides, which piston devides the respective cylinder into a chamber 19 -which is in communication through a short pipe 21 with the interior of the inner tube or chamber CA -and into a space 23 in which a compression spring 25 is housed. One end of the spring 25 is in contact with the bottom 15F of the cylinder 15, while the other end reacts against the base of piston 17. In order to have a longer run of piston 17, this may be of hollow shape and the other end of spring 25 may react against the back of the piston wall which delimits the chamber 19. On the bottom 15F a small hole 23F is provided for the air discharge from chamber 23 when the piston 17 moves in the direction of arrow f17. The cylinders 15 are symmetrically disposed inside of the edge 3B, as can be seen in the drawing, and their external envelopes, as well as the pistons and springs, must be practically identical and placed in identical manner in order not to unbalance the wheel.

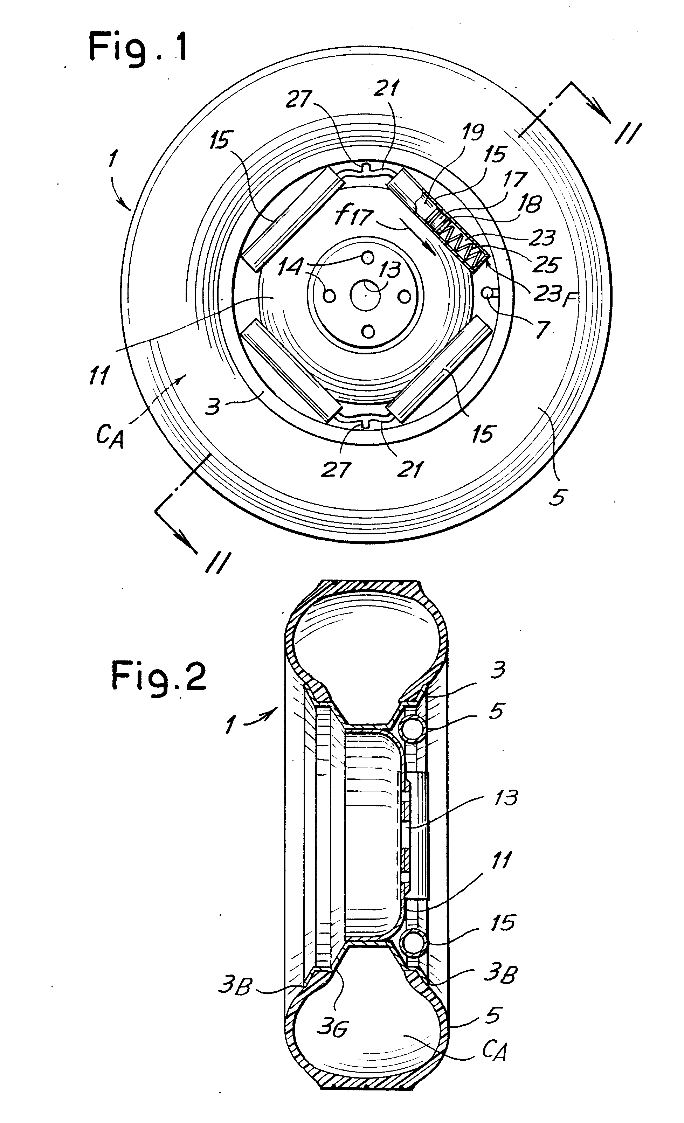

In Fig. 1 there are shown two pairs of cylinders 15 disposed in a V-wise arrangement, in which the respective chambers 19 communicate with the inside of the tyre through pipes 21 which join, forming a T, in a single stub of pipe 27. The wheel according to the invention has the object to allow the wheel tyre -once inflated at its normal pressure -to deform to a greater extent than a conventional tyre, giving rise to a larger surface of contact of the tread with the roadway and thus an improved adhesion during braking and on a bend.

The working is as follows: with the tyre flat, the springs 25 maintain the piston 17 of each cylinder in abutment, or very nearly so, except when the stops described hereinafter are present, against the cylinder base opposite to spring 25, which is drilled to have the pipe 21 jointed thereto; the volume of each chamber 19 is much reduced. When inflating the tyre up to its normal pressure (for example, 1.8 kg/cm²), the inflating air reaches the chambers 19 and displaces each piston 17 for a certain stretch as far as a position of the piston is reached for which there is a balance between the force exerted by the compressed air on its front surface and the force with which the spring 25 reacts against its rear surface. The springs 25 are so calibrated as to consent, under the normal inflation pressure, a non excessive piston movement in order that a further run of the piston remains available for the purposes of the invention: however, the piston must move for some length even with pressures slightly less than the normal inflation pressure to account either for possible differences of it, due to different indications of the gauges (not always exact), and for a slight deflation of the tyre occurring between a pumping-up and another. When, during the ride, for reasons regarding a changed trim of the car - (forward inclination due to a sharp braking, outward leaning on a bend handled at high speed), the vertical load on one wheel or a pair of wheels is increased, the tyre of the wheel according to the invention results, under the same inflation pressure condition, more yieldable than a conventional tyre. Under these circumstances, in fact, the tyre -owing to the increased load which it has to sustain -may be deformed to a greater extent than a usual tyre: in a usual tyre, a limited deflection, due to said load rise, brings about an increase of pressure for the reason that, because of the deflection, the inner volume of the tyre diminishes; and it is for this pressure rise that a different instantaneous balance takes place between the increased load and the reaction of the further deformed tyre against the roadway. With the tyre according to the invention, under the same conditions of load increase, a limited greater deflection of the tyre is possible and occurs in the zone of contact with the roadway, with the result of an improved adhesion. Such greater deflection is made possible in that some volume of air under pressure, corresponding to the reduction of the tyre inner volume due to the deflection, may penetrate through the pipes 27 and 21 inside the chambers 19 of the cylinders 15 pushing the pistons 17 in the direction of arrow f17, thus causing a further deformation of springs 25 in the direction of said arrow. The greater deflection, respect to a tyre of a conventional wheel, corresponds to the total increase of volume of the chambers 19 due to displacement of pistons 17. This increase of volume is limited by the reaction of the springs 25 whose thrust on pistons 17 increases on account of the above described displacements which stop when a new balance condition is reached. Substantially, the springs 25 - which are quite rigid as they have to oppose the force exerted on the piston by the inflation compressed air -when they are further compressed through the displacement of the piston 17, give rise to an increase of pressure inside the chambers 19 and the tyre, which increase limits, in turn, the further flatting of the tyre being subjected to a vertical load increase. Obviously, by a proper selection of the springs 25, of the diameter of cylinders 15 and of the stroke of pistons 17, it is possible for every vehicle, that the tyres mounted on wheels realized according to the invention, be deformed, in case of a rise of load upon them, as much as necessary to obtain an adequate adhesion improvement so as to avoid skiddings which can bring the vehicle out of control.

It should be appreciated that the usefulness of the wheels according to the invention results particularly interesting when they are applied to a vehicle forecarriage considering the actual generalized trend by manufacturers to appoint most of the braking system action on the brakes of the front wheels. Yet, the application may also be useful for the rear wheels, especially in the case of racing cars having rear engine. The starts of these cars take place with sharp accelerations which tend to lean backwards the vehicle with an increase of load on the rear wheels which, nevertheless, are subject to skid owing to the high power of the engines. In this case, the use of rear wheels realized according to the invention can avoid the skidding and the subsequent tyre wear, allowing at the same time, a greater acceleration on the start.

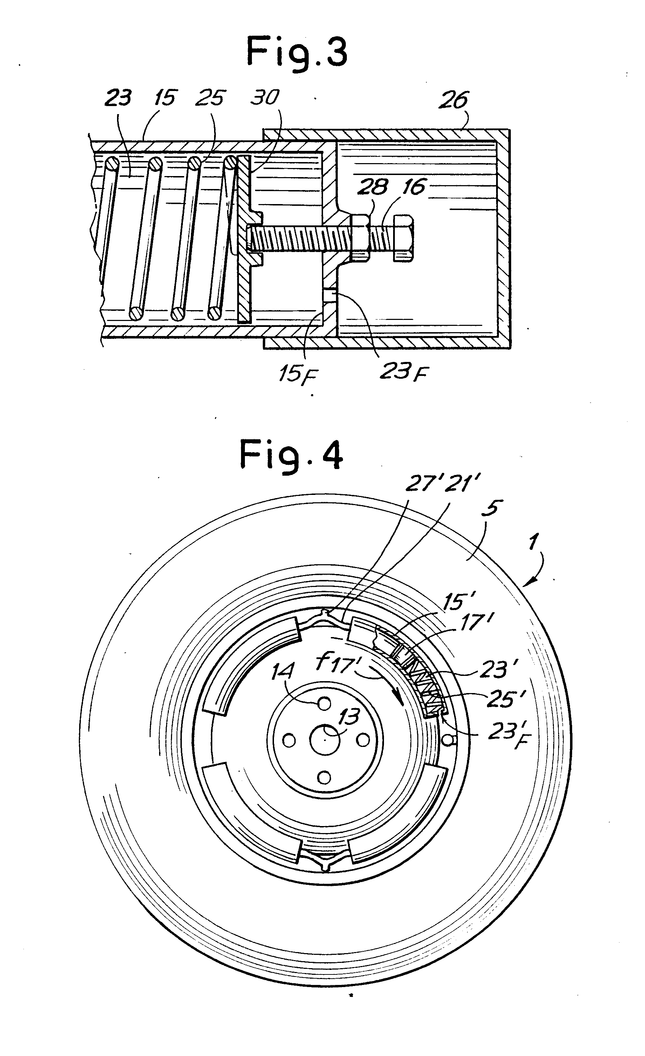

In the realization of the variable-volume plenum chamber by means of cylinders with the piston pushed by a spring, as in the example of the drawing, it may be useful to provide adjusting means for varying the force exerted by the spring on the piston. Fig.3 shows, by way of example only, the end beside the spring of a cylinder 15 provided with an adjusting screw 16 which, in turn, may be hidden by a guard cap 26 to avoid tamperings. A lock nut 28 is provided for blocking the screw 16 in the selected adjustment position.

The invention also contemplates the possibility of presetting a stop means (not shown) to limit the stroke of pistons 17 in order to prevent the further tyre deflection from reaching dangerous conditions. Also, in order to avoid that -owing to a decrease of the vertical load on the wheel -the springs 25 give rise to a displacement of pistons 17 in the direction opposite to arrow f17, thus diminishing the volume of the chamber 19 and then the total volume of the plenum chamber and favouring a reduction of the zone of contact of the tyre with the ground, the invention provides also stop means (not shown) capable of limiting the stroke of pistons 17 in the direction opposite to said arrow. This may turn useful for example in the front drive cars, particularly when driving uphill, when the front wheels tend to become lighter; should the zone of contact with the ground be reduced more than needed, the skidding would result even more favoured.

Clearly, the variable-volume plenum chamber according to the invention may also be realized through solutions different from the one of the illustrative example of the drawing, but equivalent to it. Fig. 4 shows one of such possible solutions in which, in place of cylinders 15 -which are straight circular cylinders -cylinders 15' are adopted whose axis develops as an arc of circle and in which the piston is of rotating type. The solution of Fig.4 is obviously more expensive and presents some technical problems to be solved through particular expedients; on the other hand, it has the advantage of limiting the space occupied by cylinders 15' on the wheel and of rendering their hidding easier (by means of good-looking wheel covering disks or other) for aesthetical purposes.

A further solution, the drawing of which is not supplied, especially valid in case of wheels having a rim much developed in width, like the one of the racing cars, is that in which the variable-volume plenum chamber is realized by an annular chamber having flexible but inextensible walls, located inwardly of the edge 3B of the rim. Such annular chamber may be, for example, an inner tube of small diameter,like the one of a motor-scooter, whose walls are made inextensible through a coating of robust rubberized cloth. This additional annular chamber is connected through a short pipe with the inside of the tyre inner tube of the wheel according to the invention; it is housed inside a shallow cylindrical container being opened on a side for the introduction of said additional chamber, whose bottom is turned towards the outside of the wheel and is at right angle to its axis of rotation. The diameter of the cylindrical container is obviously smaller than that of the rim (or crown) edge. Said container is secured by three or more equal columns parallel to said axis and projecting from the wheel inwardly of edge 3, and the additional annular chamber, which is not completely inflated, is deflected inside the container by a disk which can slide inside said container at right angle to its axis; such disk is pushed outwardly of the wheel and against said chamber by a set of compression springs equal to each other whose number is equal to that of the holes for the wheel fastening. Such springs are disposed in such a way that their axis coincides with the axis of the holes and their internal diameter permits the passage of a spanner to insert and tighten the bolts for such a fastening. The bottom of the cylindrical container presents, in turn, holes apt to allow the spanner to pass through, whose axis coincides with that of the holes of the wheel rim, and the inner diameter of the additional chamber is also such as to permit the passage of the spanner. Both around the holes for fastening the wheel and on the movable disk which compresses the annular chamber, suitable seats for receiving the ends of the springs may be realized.

The working of the above described, modified embodiment of the wheel according to the invention is in practice the same as the one described for the embodiment shown in Figs. 1 and 2. When, owing to an increase of the load on a wheel, a certain deflection of the tyre takes place -to a greater extent than that of a corresponding tyre under the same condition of inflation -an air volume, corresponding to the reduction of volume in the interior of the tyre due to the deflection, spills into the additional annular chamber thereby determining an increase of volume and a greater inflation of it in the direction of the wheel axis. The wall of the annular chamber -which is in contact with the slidable disk -urges the disk towards the inside of the wheel causing a further compression of the springs. Such springs, further compressed, counteract the additional deflection of the tyre thus determining a pressure rise in the supplementary chamber and hence in the inside of the tyre.

In the case of tubeless tyres, the cylinder or cylinders constituting the variable-volume plenum chamber may also be placed in the groove 3G of the rim making their application easier.

The advantages of the wheel according to the invention are obvious; the wheel, since it gives rise to an improved adhesion, eliminates detrimental skiddings of the wheels of a vehicle onto the roadway in the occasion of brakings, bends at high speed and, in case of rear drive cars, of sharp starts. The sharp brakings constitute one of the most important cases in that, on an emergency situation, with a sharp braking, even if a certain deflection of the tyre takes place, the wheels stick, and the skidding on the roadway occurs with loss of adhesion and the impossibility to steer efficiently in case of need. With the wheel according to the invention, the wheel block is avoided and the braking results far more efficient. It has in fact been proved that the braking action with blocked wheel is a great deal inferior respect to the one obtainable without their blocking. The wheel according to the invention, by increasing the adhesion and avoiding the wheels block and their skidding, in addition to rendering the braking more efficient, it also reduces the wear of the tread which, in case of skidding, overheats and is worn out untimily. It should be also noted that the cylinders, or equivalent members, making up the plenum chamber are not of large dimensions, because in the wheel according to the invention, the increased deflection of the tyre, for the effect that it brings about, has a trend to increase further. In fact, with the improved braking action, there occurs a major trend of the vehicle "to knee down". Consequently, there is a further increase of the vertical load on the wheel and a trend towards a further deflection, which, however, is avoided or mostly limited by a proper calibration and adjustment of the springs which oppose the volume increase of the plenum chamber, or, anyhow, by the above mentioned stop means.

## Claims

1) A wheel (1) for motor vehicle or the like with wheels carrying inflatable tyres comprising a rim - (3), a tyre (5) applied on the rim (3) (with inner tube or tubeless) characterized in that it comprises at least a variable-volume space or plenum chamber - (19) in communication with the inflation chamber of the tyre (5), into which some volume of air can be spilt following the deflection of the tyre against the roadway due to an increase of vertical load on the wheel (1), with an increase of the inside volume of the plenum chamber (19), at least a wall (17) of said plenum chamber being displaceable or deformable and urged by elastic means, like springs - (25) or similar, to counteract said increase of volume and limit the tyre deflection; the plenum chamber (19) permitting, under the same conditions of inflation pressure and of increase of load on the wheel (1), a major deflection respect to a common tyre, for an improved adhesion to the roadway.

2) A wheel (1) according to the preceeding claim, characterized in that the variable-volume plenum chamber is made up of the ensemble of variable-volume chambers (19) of one or more cylinders (15) secured to the rim (3), said chambers - (19) being delimited by the head wall of a piston (17) tightly slidable into said cylinder or cylinders - (15) and urged by elastic means (25) in such a direction as to counteract an increase of volume of said chambers (19).

3) A wheel (1) according to the preceding claims, characterized in that the cylinders (15) are symmetrically placed at the inside of the rim (3), at the opposite side of the wheel hub in the periphiceral space between the edge (3B) of the rim - (3) and the convexity of the disk portion (11) of it, and that the elastic means which urge the piston - (17) so as to counteract an increase of volume of the respective variable-volume chamber (19) are made up of compression springs (25).

4) A wheel (1) according to the preceding claims, and particularly to claim 3, characterized in that adjustment means (16, 28) are provided for adjusting the reaction of the spring (25) on the piston (17).

5) A wheel (1) according to claim 1, characterized in that the variable-volume plenum chamber is made up of the ensemble of the variable-volume chambers of cylinders (15') whose axis is an arc of circle, and whose piston moves performing rotations and is urged by elastic means so as to counteract volume increases of said chambers.

6) A wheel (1) according to claims 1 and 5, characterized in that the elastic means which react on the pistons (17) are compression springs (25).

7) A wheel (1) according to claims 1, 5 and 6 charac terized in that means are provided for adjusting the reaction of the spring on the piston.

8) A wheel (1) according to claim 1, characterized in that the variable-volume plenum chamber is made up of an annular chamber with flexible but inextensible walls, held in a cylindrical bottomless container located inwardly of the rim (3) at the opposite side of the hub, which chamber is placed between the other bottom and a disk wall slidable in said container, said disk wall pressing the chamber against said bottom for the action of elastic means capable of urging said wall towards the outside of the wheel so as to counteract an increase of volume of the annular chamber.

9) A wheel (1) according to claim 1 and 8, characterized in that the cylindrical container which houses said annular chamber is secured to the rim (3) so as to have its bottom at right angle to the axis of the wheel (1) and be coaxial thereto, and that the disk wall urging the annular chamber against the cylinder is pushed by compression springs equal to each other and coaxially disposed with the wheel fastening holes and is apt to allow the passage through them of a rod of a spanner to insert and tighten the bolts for said fastening.

10) A wheel (1) according to claims 1, 8 and 9, characterized in that the inside diameter of the additional or supplementary chamber is such as to consent the passage of the rod of said spanner and that holes for said passage are formed on the disk and on the cylinder bottom.

11) A wheel (1) according to claim 1, characterized in that stop means are provided to limit the increase of volume of the plenum chamber (19) in order to avoid excessive deflections of the tyre (5).

12) A wheel (1) according to claim 1, characterized in that stop means are provided to limit reductions of the plenum chamber volume (19) upon reduction of the vertical load on the wheel (1) in order to avoid a reduction of the zone of contact of the tyre (5) with the roadway with consequent reduction of adhesion.

# Fig.1

# Fig.2

# Fig.3

# Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 345 150 (NADIG) <br> * Page 1, line 10 - page 2, line 9; figure 1 * | 1,2,8 | B 60 C 23/00 <br> B 60 B 9/20 |
| X | US-A-1 786 101 (WELCH) <br> * Page 6, line 123 - page 7, line 26; figure 13 * | 1-4,6 | |
| X | US-A-2 439 188 (SAGE) <br> * Column 2, lines 11-33; figure 2 * | 1 | |
| X | US-A-4 154 279 (TSURUTA) <br> * Column 3, lines 14-39; figure 3 * | 1 | |
| X | GB-A- 12 439 (LIBBY)(A.D. 1912) <br> * Page 2, lines 3-19; figure * | 1 | **TECHNICAL FIELDS SEARCHED (Int. Cl.4)** <br><br> B 60 B 9 <br> B 60 C 23 |
| X | US-A-3 971 425 (TSURUTA) <br><br> * Column 2, lines 24-52; figures 1,2,7-10 * | 1,4,6-8 | |
| Y | CH-A- 437 005 (SCHAWALDER) <br><br> * Column 1, lines 21-39; column 2, line 24 - column 3, line 2; figures 1-3 * | 1,2,5,6,12 | |

-/-

The present search report has been drawn up for all claims

| Place of search | Date of completion of the search | Examiner |
|---|---|---|
| THE HAGUE | 13-05-1986 | AYITER I. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | US-A-4 416 353 (IVANOV)<br><br>* Column 2, lines 58-65; figures 3,4 *<br><br>--- | 1,2,5,<br>6,12 | |
| A | US-A-2 939 504 (BEDFORD)<br>* Column 2, lines 6-23; column 3, lines 17-26; figure 3 *<br><br>----- | 1,4,6, | |

TECHNICAL FIELDS SEARCHED (Int. Cl.4)

The present search report has been drawn up for all claims

| Place of search | Date of completion of the search | Examiner |
|---|---|---|
| THE HAGUE | 13-05-1986 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82